# EUROPEAN PATENT SPECIFICATION

(11) **EP 2 439 124 B1**
(45) Date of publication and mention of the grant of the patent: **06.04.2016**
(21) Application number: 11182126.0
(22) Date of filing: 21.09.2011
(51) Int. Cl.: B62B 3/06

(54) **Mobile platforms transport system**
System für den Transport mobiler Plattformen
Système de transport de plateformes mobiles

(30) Priority: 21.09.2010 PT 10530110
(43) Date of publication of application: 11.04.2012
(73) Proprietor: Imeguisa Portugal - Indústrias Metálicas Reunidas, SA, 2695-999 Palmela (PT)
(72) Inventor: Brito Filipe, Orlando José, 2950-109 Palmela (PT)
(74) Representative: Lourenço Martinho do Rosário, Ana Margarida

(56) References cited:
- WO-A2-2009/036750
- DE-U1-202010 000 400
- DE-U1-202011 000 280
- GB-A- 2 409 850
- US-A1- 2003 099 537

## Description

### Scope of Invention

The present invention describes a transportation system to move in a simple, flexible, versatile, functional and effective way, several types of mobile platforms for transportation and packaging of goods, thus facilitating the distribution of goods and platforms in different locations both in warehouses, factories or stores, as between them.

### State of the Art

There are several types of transport systems for mobile platforms, but because of their characteristics, there are a lot of limitations for loading and unloading as well as for the dimensions and geometry of the moving platforms. There are also systems that do not allow connections to the train by other systems.

From the prior art several documents can be cited, for instance, the document DE202010000400U that reveals a "mobile platforms transport system" which can be considered the closest prior art, as the document refers to a mobile platforms transport system comprising front frame, rear frame, central beam, roller bearings, platform locking system, additional security locking system, hook and eye mounted on wheels. However, differently from this document, the present patent application refers to a mobile platforms transport system wherein the transport system is equipped with a reinforced central welded to the front and the rear frame.

Documents US2003/099537 and WO2009/036750 refer to transport system. However, both systems have the problem that this patent application solves, the existence of a central beam in the upper frame chassis that does not admit platforms with different dimensions and geometries.

Can also be referred the British patent No. GB2409850 which has a transportation system that, yet also allow loading and unloading from both sides, does not admit platforms with different dimensions and geometries, or allow connections to the train by other systems.

### Advantages of the Invention

The transportation system referred in this invention allows the load and unload of mobile platforms can be carried out from either side, also admitting platforms with various dimensions and geometries. When connected to the train they allow the coupling to other systems, adapting to user needs.

It also has the advantage of being a purely mechanical system that does not use any electrical device, pneumatic or hydraulic lifting of mobile platforms.

Because of its small slope, the effort needed to load and unload platforms is minimized, while allowing less wear due to the minimized friction of the material.

To this characteristic also the locking system that only needs to be operated to unlock the platforms since in the load it is actuated mechanically and without operator intervention.

In addition they may also be mounted in the front and rear frames, security systems, that in case of central locking system failure or if the platform is projected vertically, ensures that the platform does not come out of the transportation system.

### Brief description of drawings

These and other characteristics can be easily understood through the attached drawings, which must be regarded merely as examples and not restrictive in any way the scope of the invention.
Figures 1 and 2 show respectively a view of the transport system single and double, in which its components are visible: a front frame 1, rear frame 2, central beam 3 connecting the chassis, roller bearings 4, locking system of the platforms 5, hook 6 and eye 7 mounted on wheels 8.
Figure 3 shows in detail the roller bearings 4.
Figures 4 and 5 show respectively a side view and top of the single transport system.
Figures 6 and 7 show respectively a side view and top of the double transport system.
Figure 8 shows the system transport system single in which were placed the additional security system 13.
Figure 9 shows the assembling of different transport systems in train.
Figures 10 and 11 show the components of the central beam 3 of connection from the chassis of the single transport system: angle plates 9, cover plates 10 and side plates 11.
Figure 12 shows the bottom view of the central beam 3 of the single transport system after welded to the front frame 1 and rear 2.
Figures 13 and 14 show the components of the central beam 3 of connection from the chassis of the double transport system: angle plates 9, cover plates 10 and side plates 11.
Figure 15 shows the bottom view of the central beam 3 of the double transport system after welded to the front frame 1 and rear 2.
Figure 16 shows the central beam 3 of connection to the chassis of the transport system double reinforced with cover plates 10, side plates 11.

The figures 17 and 18 show the geometry of the central beam 3 of connection to the chassis, respectively of the transport system single and double, highlighting the central parts (or soul) 12 of the beam.

### Detailed Description of the Invention

The present invention describes a transport system to move various types of movable platforms for transportation and packaging of goods, thus facilitating the distribution of goods and platforms in different locations both in warehouses, factories or stores, as between them.

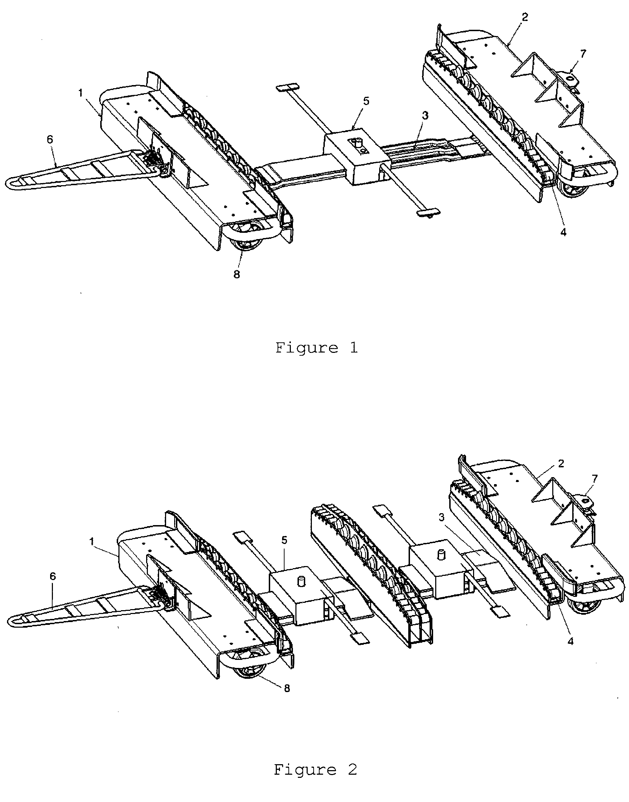

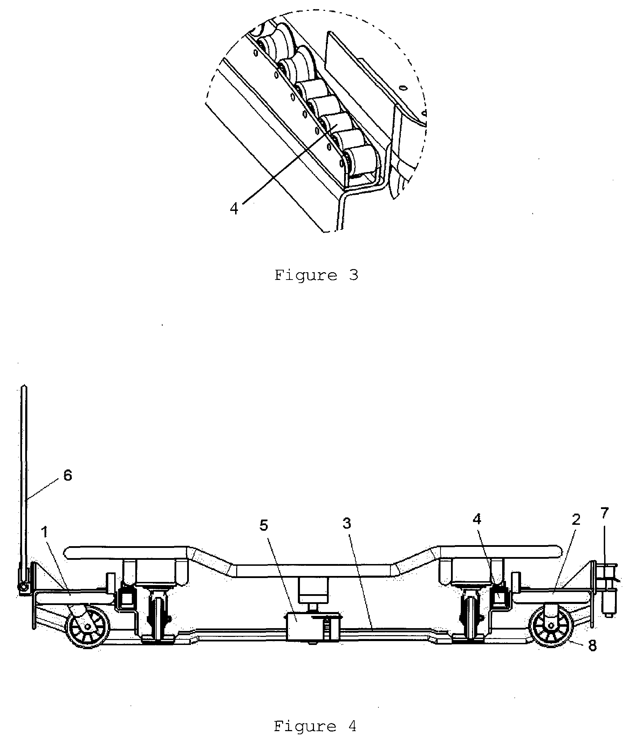

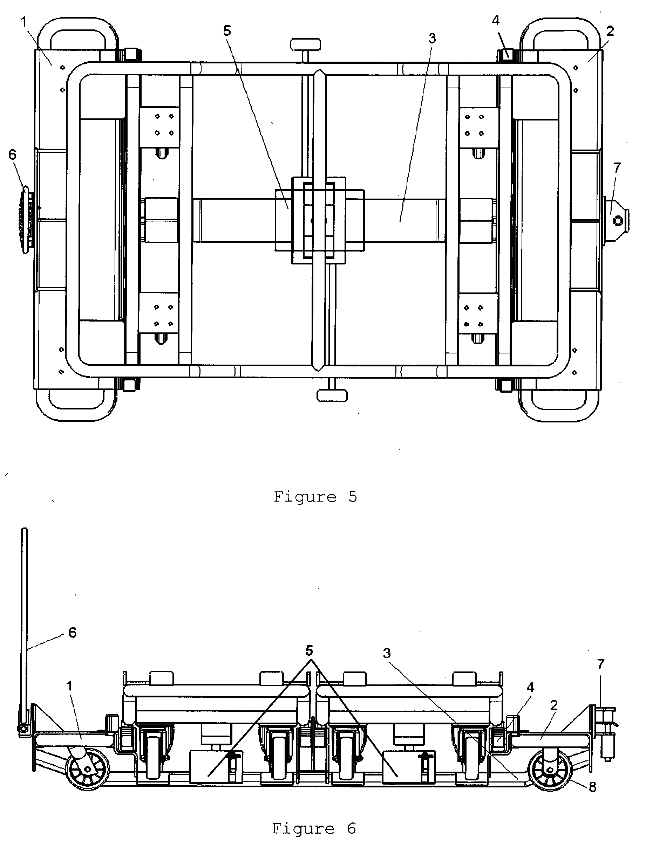

This transport system was designed ideally to receive platforms made in round tube, and according to figures 1 to 7, it consists by a front frame 1 and a rear frame 2 that are strongly linked through a central beam 3, roller bearings 4 for easy load/unload of platforms, platforms locking system 5, hook 6 and eye 7 and it is mounted on wheels 8.

As Figures 1, 4 and 5, the transport system can be designed to carry only one mobile platform of packaging of goods, being designated by single transport system.

As Figures 2, 6 and 7, the transport system can be designed to carry two mobile platforms of packing of goods, being designated by double transport system.

As a central element of this invention, the central beam 3 constructed in steel, whose innovative geometry allows this transportation system can receive any size load, because when there is no union between the upper frame chassis, are avoided conditioning and restrictions regarding the size of existing load on the mobile platform, facilitating the access to them.

Because of is structure fully open, the single transport system can be loaded with platforms whose width varies between 120 cm and 180 cm, with depths varying between 80 cm and 180 cm, with no limitation in terms of height.

The double transport system can be loaded with two platforms simultaneously, whose width varies between 60 cm and 120 cm, with depths varying between 80 cm and 180 cm, with no limitation in terms of height. If desired, this system can also carry a single platform with the characteristics described for the transport system single, platform width varies between 120 cm and 180 cm, with depths varying between 80 cm and 180 cm.

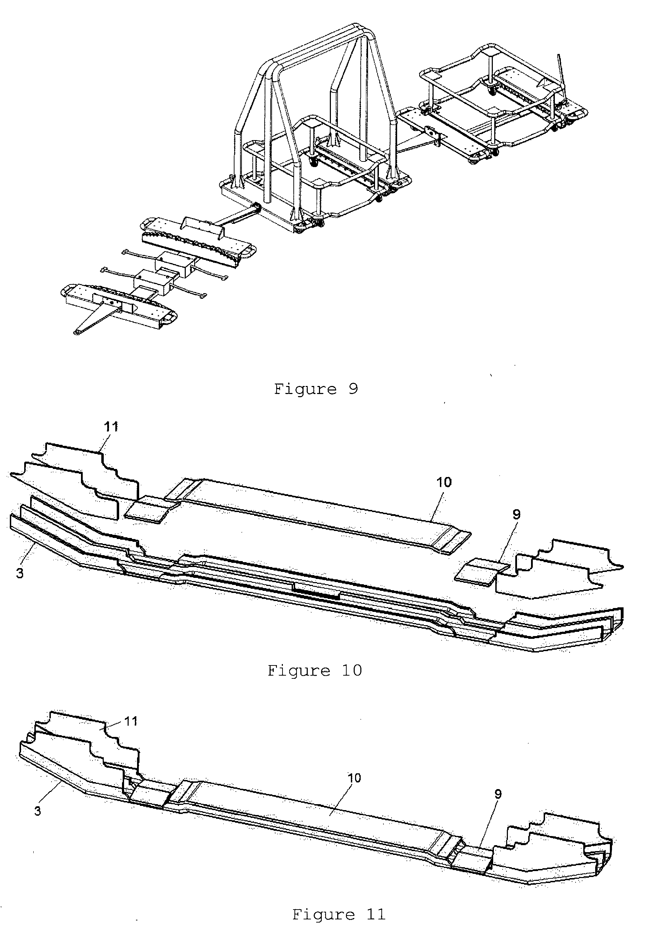

The existence of the hook 6 and eye 7, it allows the transport system to be coupled to a train, as shown in Figure 9, which may consist of various transportation systems.

As can be seen in Figure 10, to the central beam 3 of single transport system is assembled two angle plates 9, a cover plate 10 and four side plates 11. According to Figure 11, all these plates are welded to the central beam 3 to reinforce them.

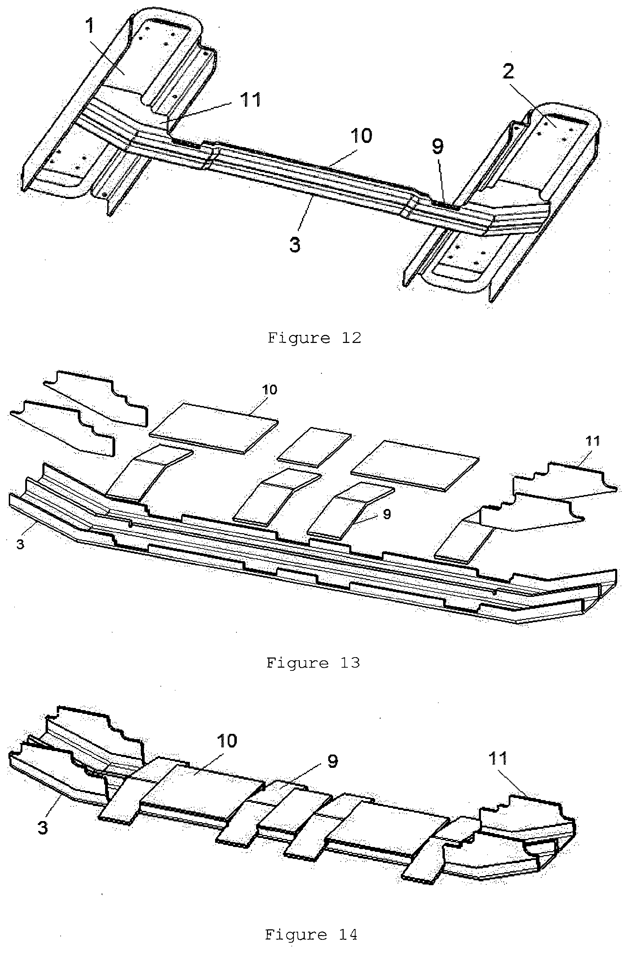

The side plates 11 are then welded to the rear 2 and a front frame 1 as shown in Figure 12.

As can be seen in Figure 13, the central beam 3 of transport system double are coupled four angle plates 9, three cover plates 10 and four side plates 11. According to Figure 14, all these plates are welded to the central beam 3 to reinforce them.

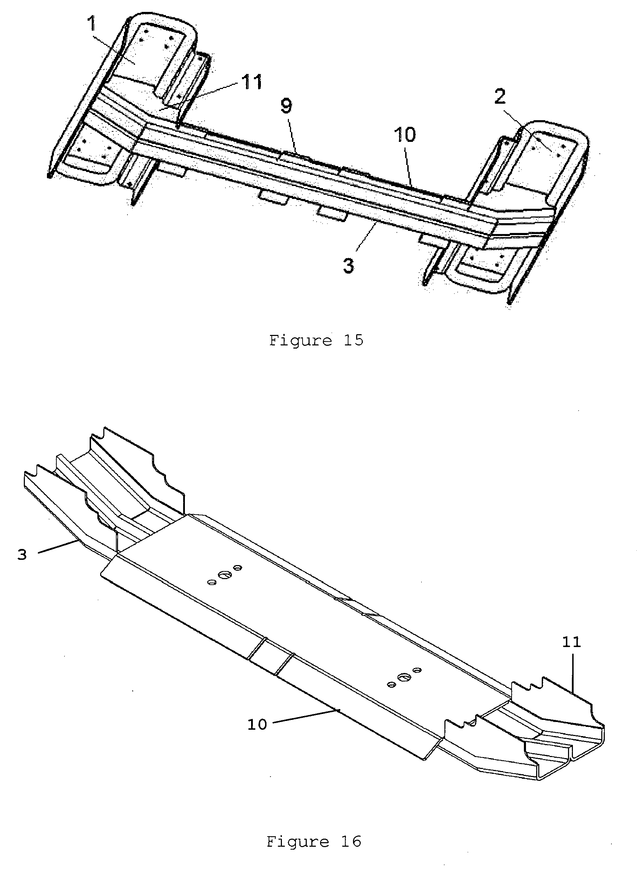

The side plates 11 are then welded to the rear 2 and a front frame 1 as shown in Figure 15.

The angle plates 9 existing in these two settings, avoid the collision of the wheels/castors of the platforms on the beam because they have the target to raise the platform at minimum distance to the floor and may even facilitate the entry of the same.

In the case of double transport system, as is required especially in the transport of heavy loads, to the central beam 3, as shown in Figure 16, is coupled one cover plate 10 and the side plates 11, allowing that in the transport system is loaded with containers up to 500kg + 500kg.

The side plates 11 are then welded to the front frame 1 and rear 2.

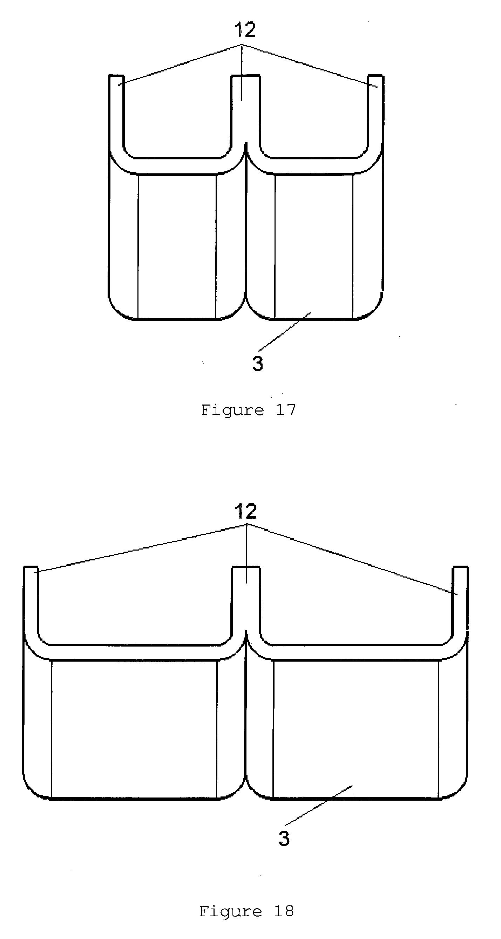

The geometric shape of the central beam 3 allows that the efforts which is submitted to be minimized, providing a controlled elastic deformation without the welding areas being above the allowable stresses, the three central parts 12 of the beam shown in Figures 17 and 18 will avoid an excessive bending.

In the transport system is also mounted a platform locking system 5, which is activated automatically by the platform when it is loaded, being blocked, avoiding that can release during the transport. To release the platform is needed only to activate any one of the pedals in the platform locking 5.

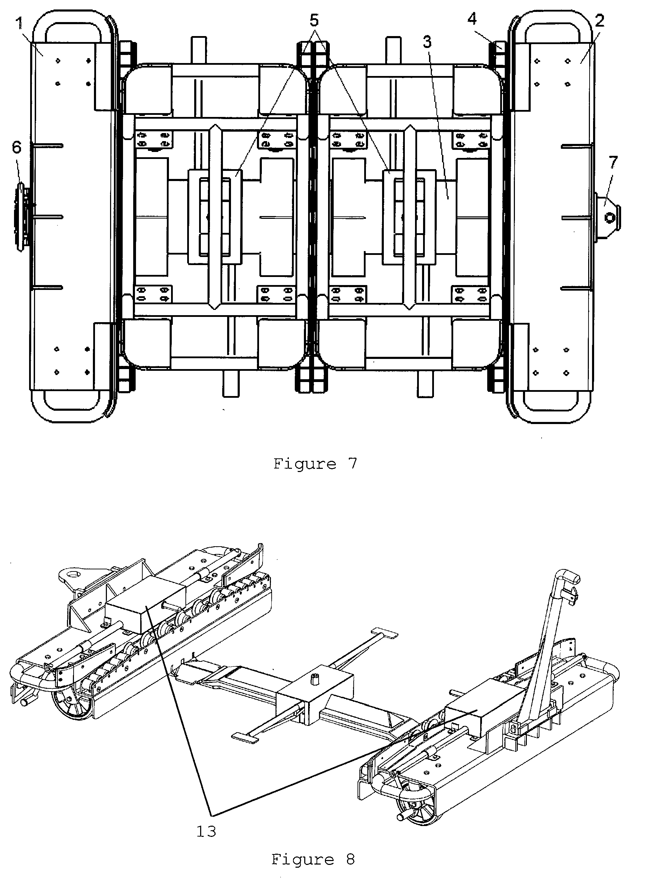

It may also be included systems for additional security lock 13, as shown in Figure 8, which ensures that the platform does not come out of the transportation system if there is a failure of the central locking system or if the platform is vertically projected.

## Claims

1. Transport system of mobile platforms comprising a front frame (1), rear frame (2), central beam (3) for the connection between front frame (1) and the rear frame (2), roller bearings (4), platforms' locking system (5), additional security locking system (13), hook (6) and eye (7), mounted on wheels (8), **characterized in that** the central beam (3) comprises means to avoid an excessive bending and being reinforced with angle plates (9), cover plates (10) and side plates (11).

2. Transport system of mobile platforms according to the previous claim, **characterized in that** the central beam (3) for the connection between the front frame (1) and the rear frame (2) is built in metal.

3. Transport system of mobile platforms according to the previous claim, **characterized in that** the metal of the central beam (3) for the connection between the front frame (1) and the rear frame (2) is namely, steel.

4. Transport system of mobile platforms according to the previous claims, **characterized in that** the central beam (3) connects, through the underside, the front frame (1) and the rear frame (2).

5. Transport system of mobile platforms according to claim 1, **characterized in that** the elastic deformation is controlled in such a way that the welding areas are not subject to efforts higher than the allowable stresses as a result of the angle plates (9), the cover plates (10) and the side plates (11 of reinforcement of the central beam (3).

6. Transport system of mobile platforms according to claim 1, **characterized in that** the excessive bending is controlled by the three central parts (12) of the central beam (3).

7. Transport system of mobile platforms according to claim 1, **characterized in that** the angle plates (9), the cover plates (10) and the side plates (11) are welded to the central beam (3).

8. Transport system of mobile platforms according to claim 1, **characterized in that** the side plates (11) are welded to the front frame (1) and to the rear frame (2).

9. Transport system of mobile platforms according to claim 1, **characterized in that** the collision of the wheels/castors of the platforms on the central beam (3) is avoided, and the entry of the platforms is facilitated, by the angle plates (9).

10. Transport system of mobile platforms according to claim 1, **characterized in that** a locking system (5) is coupled to the center beam (3).

11. Transport system of mobile platforms according to the previous claim, **characterized in that** the locking system (5) is automatically activated by pressure when the platforms are loaded.

12. Transport system of mobile platforms according to claim 1, **characterized in that** the security locking systems to reinforce the locking system (5) are coupled to the front frame (1) and to the rear (2) frame.

## Patentansprüche

1. System für den Transport mobiler Plattformen, umfassend ein vorderes Fahrgestell (1), ein hinteres Fahrgestell (2), einen zentralen Träger (3) für die Verbindung zwischen dem vorderen Fahrgestell (1) und dem hinteren Fahrgestell (2), Rollenlager (4), ein Verriegelungssystem (5) für die Plattformen, ein zusätzliches Sicherheitsverriegelungssystem (13), Haken (6) und Öse (7), montiert auf Rädern (8), **dadurch gekennzeichnet, dass** der zentrale Träger (3) Mittel zur Vermeidung von übermäßigen Biegebeanspruchungen aufweist und mit Winkelplatten (9), Deckplatten (10) und Seitenplatten (11) verstärkt ist.

2. System für den Transport mobiler Plattformen nach dem vorangegangenen Anspruch, **dadurch gekennzeichnet, dass** der zentrale Träger (3) für die Verbindung zwischen dem vorderen Fahrgestell (1) und dem hinteren Fahrgestell (2) aus Metall besteht.

3. System für den Transport mobiler Plattformen nach dem vorangegangenen Anspruch, **dadurch gekennzeichnet, dass** das Metall für den zentralen Träger (3) für die Verbindung zwischen dem vorderen Fahrgestell (1) und dem hinteren Fahrgestell (2) insbesondere Stahl ist.

4. System für den Transport mobiler Plattformen nach den vorangegangenen Ansprüchen, **dadurch gekennzeichnet, dass** der zentrale Träger (3) das vordere Fahrgestell (1) und das hintere Fahrgestell (2) auf der unteren Seite verbindet.

5. System für den Transport mobiler Plattformen nach Anspruch 1, **dadurch gekennzeichnet, dass** die elastische Verformung in der Weise gesteuert wird, dass die Schweißstellen keinen Kräften unterzogen werden, die die zulässigen Spannungen übersteigen, als Ergebnis der Winkelplatten (9), der Deckplatten (10) und der Seitenplatten (11) der Verstärkung des zentralen Trägers (3).

6. System für den Transport mobiler Plattformen nach Anspruch 1, **dadurch gekennzeichnet, dass** die übermäßigen Biegebeanspruchungen durch die drei zentralen Teile (12) des zentralen Trägers (3) gesteuert werden.

7. System für den Transport mobiler Plattformen nach Anspruch 1, **dadurch gekennzeichnet, dass** die Winkelplatten (9), die Deckplatten (10) und die Seitenplatten (11) an den zentralen Träger (3) angeschweißt sind.

8. System für den Transport mobiler Plattformen nach Anspruch 1, **dadurch gekennzeichnet, dass** die Seitenplatten (11) an das vordere Fahrgestell (1) und das hintere Fahrgestell (2) angeschweißt sind.

9. System für den Transport mobiler Plattformen nach Anspruch 1, **dadurch gekennzeichnet, dass** die Kollision der Räder/Rollen der Plattformen auf dem zentralen Träger (3) vermieden wird und die Aufnahme der Plattformen durch die Winkelplatten (9) erleichtert wird.

10. System für den Transport mobiler Plattformen nach Anspruch 1, **dadurch gekennzeichnet, dass** das Verriegelungssystem (5) an den zentralen Träger (3) gekoppelt ist.

11. System für den Transport mobiler Plattformen nach dem vorangehenden Anspruch, **dadurch gekennzeichnet, dass** das Verriegelungssystem (5) automatisch durch den von den beladenen Plattformen ausgeübten Druck aktiviert wird.

12. System für den Transport mobiler Plattformen nach Anspruch 1, **dadurch gekennzeichnet, dass** das Sicherheitsverriegelungssystem zur Verstärkung des Verriegelungssystems (5) an das vordere Fahrgestell (1) und das hintere Fahrgestell (2) gekoppelt ist.

## Revendications

1. Système de transport de plateformes mobiles comprenant châssis frontal (1), châssis arrière (2), poutre centrale (3) pour la liaison entre le châssis frontal (1) et le châssis arrière (2), roulements à billes(4), système de verrouillage (5) des plateformes, système de verrouillage de sécurité supplémentaire (13), agrafe (6)(7) monté sur roues (8), **caractérisé par** une poutre centrale (3) comprenant un moyen pour éviter trop de sinuosité et renforcée par des plaques diagonales (9), plaques de protection (10) et plaques latérales (11).

2. Système de transport de plateformes mobiles selon la revendication précédente, **caractérisé par** une poutre centrale (3) pour la liaison entre le châssis frontal (1) et le châssis arrière (2) construit en métal.

3. Système de transport de plateformes mobiles selon la revendication précédente, **caractérisé en ce que** le métal de la poutre centrale (3) pour la liaison entre le châssis frontal (1) et le châssis arrière (2) est, à savoir, en acier.

4. Système de transport de plateformes mobiles selon la revendication précédente **caractérisé par** une poutre centrale (3) reliant, par le dessous, le châssis frontal(1) au châssis arrière (2).

5. Système de transport de plateformes mobiles selon la revendication 1, **caractérisé en ce que** la déformation élastique est contrôlée de telle sorte que les zones de soudage ne soient pas soumises à des efforts supérieurs aux pressions permises en résultat des plaques diagonales (9), des plaques de protection (10) et des plaques latérales (11) de renforcement de la poutre centrale (3).

6. Système de transport de plateformes mobiles selon la revendication 1, **caractérisé en ce que** le pliage excessif est contrôlé par les trois parties centrales (12) de la poutre centrale (3).

7. Système de transport de plateformes mobiles selon la revendication 1, **caractérisé en ce que** les plaques diagonales (9), les plaques de protection (10) et les plaques latérales (11) sont soudées à la poutre centrale (3).

8. Système de transport de plateformes mobiles selon la revendication 1, **caractérisé en ce que** les plaques latérales (11) sont soudées au châssis frontal (1) et au châssis arrière (2).

9. Système de transport de plateformes mobiles selon la revendication 1, **caractérisé en ce que** la collision des roues/roulettes des plateformes dans la poutre centrale (3) est évitée, et l'entrée des plateformes est facilitée, par les plaques diagonales (9).

10. Système de transport de plateformes mobiles selon la revendication 1, **caractérisé en ce que** le système de verrouillage (5) se trouve relié à la poutre centrale (3) .

11. Système de transport de plateformes mobiles selon la revendication précédente, **caractérisé en ce que** le système de verrouillage (5) est automatiquement activé par pression lorsque les plateformes sont chargées.

12. Système de transport de plateformes mobiles selon la revendication 1, **caractérisé en ce que** les systèmes de verrouillage de sécurité, pour renforcer le système de verrouillage (5), sont reliés au châssis frontal (1) et au châssis arrière (2).
